# EUROPÄISCHE PATENTSCHRIFT

(11) **EP 0 764 395 B1**
(45) Veröffentlichungstag und Bekanntmachung des Hinweises auf die Patenterteilung: **18.08.1999**
(21) Anmeldenummer: 96114277.5
(22) Anmeldetag: 06.09.1996
(51) Int. Cl.: A01B 35/22

(54) **Verfahren zum Anschliessen eines Bodenbearbeitungswerkzeugs an einen Befestigungsschaft und Ausbildung von Bodenbearbeitungswerkzeug und Befestigungsschaft zum Durchführen dieses Verfahrens**
Method of connecting a soil working implement to a shank and embodiment of a soil working implement and shank for carrying out this method
Procédé de fixation d'un outil de travail du sol à une tige et réalisation d'un outil de travail du sol et d'une tige pour la mise en oeuvre de ce procédé

(30) Priorität: 15.09.1995 US 537160
(43) Veröffentlichungstag der Anmeldung: 26.03.1997
(73) Patentinhaber: Deere & Company, Moline, Illinois 61265-8098 (US)
(72) Erfinder: Bucher, David Hoffer, Des Moines, Iowa 50322 (US); Winter, David Carl, Johnston, Iowa 50131 (US)
(74) Vertreter: Feldmann, Bernhard

(56) Entgegenhaltungen:
- AU-B- 8 771 484
- DE-B- 1 101 040
- DE-C- 487 903
- US-A- 1 345 209
- US-A- 4 638 868

## Beschreibung

Die Erfindung bezieht sich auf ein Verfahren zum Anschließen eines Bodenbearbeitungswerkzeugs, insbesondere eines Gänsefußschars eines Gerätes zur Bodenpflege bzw. -bearbeitung, an einen Befestigungsschaft und auf die Ausbildung des Bodenbearbeitungswerkzeugs und des Befestigungsschafts zur Durchführung dieses Verfahrens.

Derartige Bodenbearbeitungswerkzeuge, von denen an einem Gerät eine Vielzahl vorgesehen ist, unterliegen einem großen Verschleiß oder werden im Einsatz schnell beschädigt, so daß sie regelmäßig ersetzt werden müssen. In der Regel sind sie mit einem von einem Geräterahmen nach unten zeigenden Befestigungsschaft verschraubt (US-A-2 595 353). Bei einem nötig werdenden Ersatz sind dann die Schrauben meistens nicht oder nur schwer lösbar. Andererseits ist es auch nicht mehr neu, wie es in dem Dokument US-A-4 779 686 bei der Diskussion des Standes der Technik erläutert ist, derartige Bodenbearbeitungswerkzeuge mit ihrem Schaft durch einen Preßsitz zu verbinden (siehe auch DE-C-487903). Zum sicheren Befestigen aber auch zum Lösen bei einem fällig werdenden Ersatz sind ein oder mehrere kräftige Hammerschläge erforderlich.

Die mit der Erfindung zu lösende Aufgabe wird darin gesehen, das Bodenbearbeitungswerkzeug möglichst einfach mit dem zugehörigen Befestigungsschaft verbinden zu können. Die mit Anspruch 1 definierte Erfindung sieht deshalb vor, daß das Bodenbearbeitungswerkzeug zunächst an einer vorherbestimmten und gekennzeichneten Anbaustelle an dem Befestigungsschaft mit seinem Befestigungsabschnitt an den Befestigungsschaft angesetzt und nachfolgend auf den Befestigungsschaft geklappt oder geschwenkt wird. Danach wird der Befestigungsabschnitt des Bodenbearbeitungswerkzeugs auf dem Befestigungsschaft in einer ersten Richtung bis in eine Feststellstellung verschoben, und das Bodenbearbeitungswerkzeug wird in der Feststellstellung durch Reibschluß mit dem Befestigungsschaft verspannt. Alle diese Vorgänge können von Hand ohne Zuhilfenahme eines Werkzeugs erfolgen. Sollte dabei das Bodenbearbeitungswerkzeug in seiner Feststellstellung noch nicht hundertprozentig fest sitzen, so erfolgt dies bei einer Ausbildung des Bodenbearbeitungswerkzeugs als Gänsefußschar spätestens, wenn der Gänsefußschar in das Erdreich eindringt, weil dann der Ackerboden bestrebt ist, den Gänsefußschar noch weiter zu verschieben.

Solange sich das Bodenbearbeitungswerkzeug in seiner Arbeitsstellung im Ackerboden befindet, sitzt es in seiner Feststellstellung auch betriebssicher fest. Beim Ausheben des Geräts in eine Transportstellung aber auch bei dem Wirksamwerden einer Überlastsicherung, beispielsweise beim Auftreffen des Arbeitswerkzeugs auf ein Hindernis, wie auf einem Stein, kann sich bei einem Reibschluß das Arbeitswerkzeug unter Umständen aus seiner Feststellstellung lösen. Damit es dann nicht verloren geht, sondern auf dem Befestigungsschaft verbleibt, ist nach der Erfindung außerdem vorgesehen, daß der Befestigungsabschnitt von der Anbaustelle aus in einer zweiten der ersten Richtung entgegengesetzten Richtung auf dem Befestigungsschaft in eine ein Abfallen des Bodenbearbeitungswerkzeugs von dem Befestigungsschaft verhindernde Stellung verschiebbar ist.

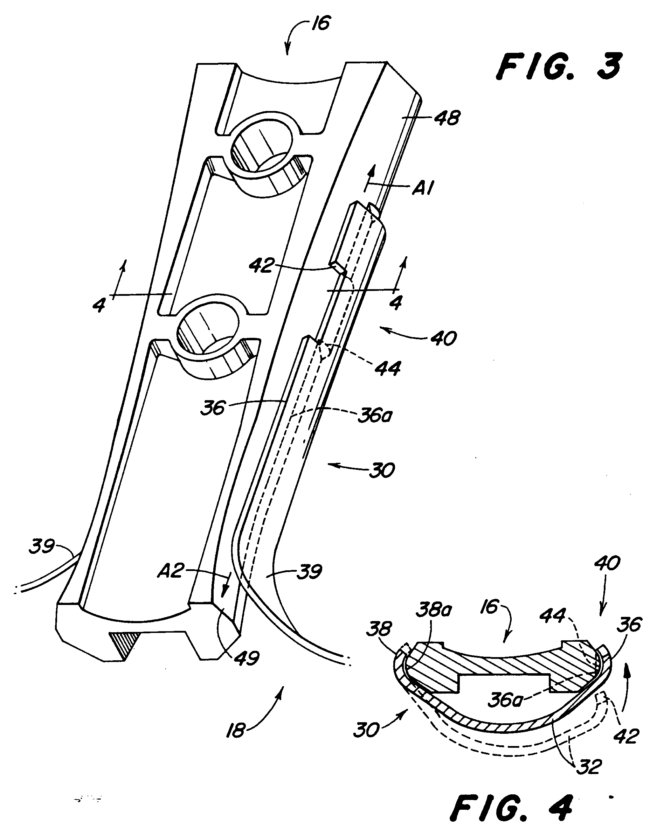

Was die Ausbildung des Bodenbearbeitungswerkzeugs und die des Befestigungsschafts anbelangt, so wird nach der Erfindung hierzu vorgeschlagen, daß der Befestigungsschaft mit einem ersten und einem zweiten zueinander Abstand aufweisenden Sicherungsabschnitt versehen ist und daß der Befestigungsabschnitt des Bodenbearbeitungswerkzeugs mit Führungsteilen versehen ist, die derart angeordnet sind, daß sie eine Verschiebung des Befestigungsabschnitts aus der Anbaustelle in die erste oder in die zweite Richtung zulassen und in mindestens einem Sicherungsabschnitt eine weitergehende Verschiebung blockieren. Auf diese Weise kann das Bodenbearbeitungswerkzeug nicht über die Sicherungsabschnitte hinaus verstellt werden. Zweckmäßig ist der Befestigungsschaft darüberhinaus an seinen Seiten schienenförmig ausgebildet, wobei die Seiten des Befestigungsschafts von den Führungsteilen an dem Befestigungsabschnitt umgriffen werden und sich die Seiten des Befestigungsschafts im Bereich zumindest eines Sicherungsabschnitts nach außen erweitern. Durch diese zusätzliche Maßnahme wird sichergestellt, daß sich das Bodenbearbeitungswerkzeug nicht auf dem Befestigungsschaft drehen kann, andererseits der Befestigungsschaft dem Befestigungsabschnitt eine sichere Führung anbietet, und daß das Arbeitswerkzeug aus seiner Anbaustelle leicht verschoben werden kann. Die Führungsteile an den beiden Seiten des Befestigungsabschnitts haben in der Regel auf ihrer gesamten Länge einen konstanten Abstand zueinander, so daß sie im Bereich des einen Sicherungsabschnitts, der der Feststellstellung zugeordnet ist, gegen die sich schräg nach außen erstreckenden Schienen in diesem Bereich stoßen und den Reibschluß ermöglichen. Damit die Anbaustelle oder Aufsetzstelle für den Befestigungsabschnitt auf den Befestigungsschaft leicht aufgefunden werden kann, ist nach einem weiteren erfindungsgemäßen Vorschlag eine schienenförmige Seite des Befestigungsschafts mit einem Vorsprung und der diese Seite eventuell übergreifende Führungsteil des Befestigungsabschnitts mit einer entsprechenden Aussparung versehen. Der Befestigungsabschnitt kann dabei schalenförmig ausgebildet sein, wie es in Fig. 4 der Zeichnung angedeutet ist, wodurch er in sich nachgiebig sein kann und im auf dem Befestigungsschaft aufgesetzten Zustand leicht unter Spannung steht. Vorteilhaft kann der Befestigungsschaft mit einem die schienenförmigen Seiten und die Sicherungsabschnitte aufweisenden Adapter versehen sein. Dieser kann mit dem Befestigungsschaft einstückig ausgebildet oder auch mit diesem verschraubt sein. Der Sicherungsabschnitt, der ein Herabfallen des Bodenbearbeitungswerkzeugs vom dem Befestigungsschaft verhindert, muß nicht unbedingt so ausgebildet sein, wie der der Feststellstellung zugeordnete Sicherungsabschnitt. Er kann mit einem Ring oder mit einer diesem Zweck dienenden Verdickung usw. ausgestattet sein. Nach der Erfindung wird jedoch bevorzugt, daß die Sicherungsabschnitte am oberen und am unteren Ende des Adapters vorgesehen sind, wobei sich die schienenförmigen Seiten am oberen Ende nach oben und außen und am unteren Ende nach unten und außen erweitern. Da die Führungsteile des Befestigungsabschnitts in den Gänsefußschar übergehen, kommen dann diese Übergänge gegen den unteren Sicherungsabschnitt zur Anlage, wenn sich das Arbeitswerkzeug aus seiner Feststellstellung gelöst haben sollte, ohne daß es zu einem Reibschluß kommt.

In der Zeichnung ist ein nachfolgend näher erläutertes Ausführungsbeispiel der Erfindung dargestellt. Es zeigt:
- Fig. 1: den unteren Teil eines Befestigungsschafts mit einem Gänsefußschar, die bei in der Landwirtschaft einsetzbaren Bodenbearbeitungsgeräten eingesetzt werden;
- Fig. 2: den Gänsefußschar nach Fig. 1 in der Draufsicht;
- Fig. 3: das untere Ende des Befestigungsschafts mit sich in seiner Anbaustelle befindlichem Befestigungsabschnitt des Gänsefußschars und
- Fig. 4: einen Schnitt nach der Linie 4:4 in Fig. 3.

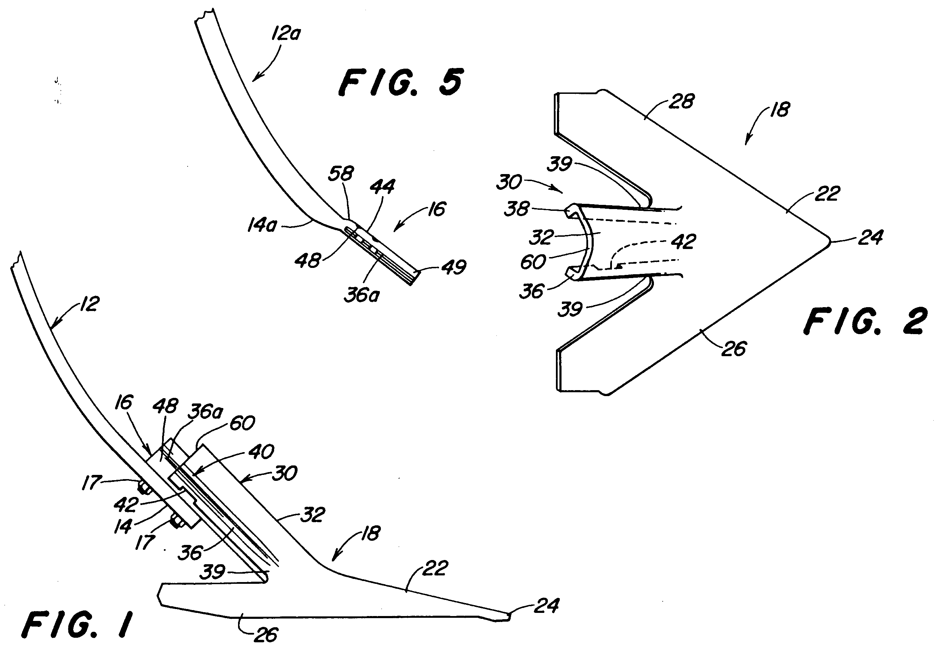

In Fig. 1 der Zeichnung ist ein Arbeitswerkzeug eines in der Landwirtschaft einsetzbaren Bodenbearbeitungsgeräts dargestellt. Derartige Arbeitswerkzeuge dienen beispielsweise der Bodenauflockerung oder werden zur Unkrautvernichtung eingesetzt. In jedem Fall unterliegen sie einem großen Verschleiß und müssen daher des öfteren ersetzt werden. In der Regel sind sie über einen Schaft oder Stiel 12, der hochstehend, gerade, S-förmig, federnd usw. ausgebildet sein kann, an einem in der Zeichnung der Einfachheit halber nicht dargestellten Rahmen des landwirtschaftlichen Geräts angeschlossen. Das Arbeitswerkzeug ist an das untere Ende 14 des Stiels 12 anschließbar, wozu mit diesem ein Adapter 16 über Schrauben 17 verbunden ist. Andererseits kann der Adapter auch in dem Stiel integriert sein, wie es in Fig. 5 gezeigt ist, wo der Stiel mit 12a und das untere Stielende mit 14a bezeichnet ist. Auf den Adapter 16 ist das Arbeitswerkzeug, beim Ausführungsbeispiel ein Gänsefußschar 18, aufsetzbar, das im Einsatz den Boden durchpflügt.

Der Gänsefußschar 18 ist im wesentlichen V-förmig ausgebildet und hat einen unteren Teil 22 mit einer Spitze 24, von der sich die Flügel 26 und 28 aus nach rückwärts und seitlich nach außen erstrecken. Zwischen den Flügeln 26 und 28 ist am rückwärtigen Ende des unteren Teils 22 ein Halsstück 30 oder ein Anschlußstück vorgesehen, das sich schräg nach oben und nach rückwärts erstreckt. Das Hals- oder Anschlußstück 30 ist im Querschnitt schalenförmig ausgebildet oder weist eine nach außen gebogene Fläche 32 auf, die an ihren Seiten in nach innen gebogene Schenkel oder Flansche 36 und 38 ausläuft. Die in den Ansprüchen als Führungsteile bezeichneten Schenkel oder Flansche 36 und 38 umfassen im montierten Zustand entsprechend bzw. komplementär ausgebildete Seiten 36a und 38a des Adapters 16 (siehe Fig. 1, 3 und 4) und erlauben, daß der Gänsefußschar 18 in Grenzen auf dem Adapter 16 verschoben werden oder gleiten kann. Der nach außen gebogene Übergangsbereich am unteren Teil 22 des Gänsefußschars in das Halsstück 30 ist mit 39 bezeichnet.

Der Adapter 16 und das Anschlußstück 30 sind mit komplementären Merkteilen 40 versehen, um den An- und Abbau des Anschlußstücks 30 an einer einzigen Stelle, und zwar der Anbaustelle des Adapters 16 zu erleichtern. Der Anbau des Gänsefußschars 18 an den Stiel erfolgt dadurch, daß das Hals- oder Anschlußstück 30 an einer ganz bestimmten Stelle an den Adapter angesetzt und nachfolgend auf den Adapter geklappt oder geschwenkt wird. Der Abbau erfolgt umgekehrt.

Wie aus der Zeichnung leicht zu ersehen ist, bestehen die Merkteile 40 aus einer Nut 42 bzw. aus einem in den einen Flansch 36 eingeschnittenen Ausschnitt im Anschlußstück 30 und aus einer komplementären Nase 44 oder aus einem entsprechenden Vorsprung, der auf dem Adapter 16 vorgesehen ist. Auf diese Weise kann der Gänsefußschar 18 nur an der vorherbestimmten Stelle auf den Adapter aufgeschwenkt werden, wie es mit den gestrichelten Linien in Fig. 4 angedeutet ist. Im einzelnen wird das Halsstück 30 mit seinem dem den Ausschnitt 42 aufweisenden Flansch 36 abgelegenen Flansch 38 gegen die entsprechende Seite 38a des Adapters angelegt und dann gedreht. Sobald dann das Halsstück 30 den Adapter mit seinen nach innen gebogenen Flanschen 36, 38 umfaßt, kann der Gänsefußschar von der Anbaustelle auf dem Adapter nach oben in eine Feststellstellung, die der Arbeitsstellung entspricht, verschoben werden. Die Feststellung erfolgt durch Reibschluß, wozu die Seitenkanten 36a und 38a des Adapters an seinem oberen Ende trichterförmig oder schräg nach außen gebogen sind. Auch an dem unteren Ende des Adapters sind die Seitenkanten nach außen abgebogen, damit ein Herabfallen des Gänsefußschars von seinem Stiel vermieden wird. Wird der Gänsefußschar aus seiner Feststellstellung gelöst, dann kann er auf dem Stiel nach unten rutschen und wird am unteren Ende des Adapters durch die Übergänge 39 gehalten. Der sich nach außen und oben bzw. nach außen und unten erweiternde Bereich des Adapters 16 ist an seinem oberen Ende mit 48 und an seinem unteren Ende mit 49 bezeichnet. Zwischen dem sich erweiternden, oberen und unteren Bereich des Adapters liegt die Anbaustelle für den Gänsefußschar. Wird nun der Gänsefußschar 18 von seiner Anbaustelle auf dem Adapter 16 nach oben geschoben in Richtung des Pfeils A1, und zwar durch ein auf ihn einwirkendes Werkzeug oder durch die während des Einsatzes auf ihn einwirkende Bodenkraft, so entsteht zwischen den Flanschen 36 und 38 und den Seiten 36a und 38a am oberen Ende ein Reibschluß, der den Gänsefußschar dann in seiner Arbeitsstellung feststellt. Der untere Bereich 49 ist umgekehrt keilförmig ausgebildet, erweitert sich damit nach unten und wirkt als untere Begrenzung oder als ein unteren Anschlag, wenn der Gänsefußschar aus seiner Feststellstellung gelöst wurde und in Richtung des Pfeils A2 nach unten rutscht.

Vorzugsweise ist die Breite des schmalsten Teils des Adapters 16 zwischen den Bereichen 48 und 49 nicht kleiner oder idealerweise sogar etwas größer als die lichte Weite des Anschlußstücks 30, um den An- und Abbau des Gänsefußschars nur an der Anbaustelle zu ermöglichen. Gleichfalls ist, um zwischen dem Anschlußstück 30 des Gänsefußschars und dem Adapter 16 einen Festsitz beibehalten zu können, die Wegstrecke, die der Gänsefußschar in Richtung A2 nach unten rutschen kann, auf einem Minimum gehalten. Der Festsitz in der gelösten Stellung vermindert die Möglichkeit, daß der Gänsefußschar von dem unteren Ende des Adapters herunter fallen könnte.

Um das Auffinden der Anbaustelle am Adapter noch weiter zu erleichtern, ist am Adapter noch eine Linie oder eine Markierung 58 vorgesehen (Fig. 5), zu der das Kopfende 60 des Anschlußstücks 30 ausgerichtet werden kann. Damit kann der Gänsefußschar für seinen Anbau an den Stiel 12 bzw. 12a zunächst gegen die Seite 38a gelegt werden, wobei dann das Kopfende 60 mit der Markierung 58 bündig sein soll. Danach wird der Gänsefußschar gedreht bzw. derart geschwenkt, daß die Nut 42 über die Nase 44 gleitet, bis daß der Flansch 36 die Seite 36a umgreift, wie es in ausgezogenen Linien in Fig. 4 angedeutet ist. Danach wird der Gänsefußschar beispielsweise durch einen oder durch mehrere Hammerschläge nach oben in den sich keilförmig nach außen erweiternden Bereich 48 getrieben, bis er in seiner Feststellstellung sicher verspannt ist.

Der Abbau des Gänsefußschars erfolgt ähnlich. Der Feststellsitz wird gelöst, und der Bereich 49 des Adapters verhindert ein Herabfallen des Gänsefußschars. Dieser wird in die Anbaustellung geschoben und der Flansch 36 wird einfach von der Seite 36a fortgeschwenkt, wie es in Fig. 4 durch die gestrichelten Linien angedeutet ist. Danach kann der Gänsefußschar abgenommen und falls erforderlich durch einen neuen ersetzt werden.

## Patentansprüche

1. Verfahren zum Anschließen eines Bodenbearbeitungswerkzeugs, insbesondere eines Gänsefußschars (18) eines Gerätes zur Bodenpflege bzw. -bearbeitung, an einen Befestigungsschaft (12), gekennzeichnet durch die nachfolgenden Schritte:
- das Bodenbearbeitungswerkzeug wird an einer vorherbestimmten und gekennzeichneten Anbaustelle an dem Befestigungsschaft (12) mit seinem Befestigungsabschnitt (30) an den Befestigungsschaft (12) angesetzt und nachfolgend auf den Befestigungsschaft geklappt oder geschwenkt;
- der Befestigungsabschnitt (30) des Bodenbearbeitungswerkzeugs wird auf dem Befestigungsschaft (12) in einer ersten Richtung bis in eine Feststellstellung verschoben;
- das Bodenbearbeitungswerkzeug wird in der Feststellstellung durch Reibschluß mit dem Befestigungsschaft (12) verspannt, wobei
der Befestigungsabschnitt (30) von der Anbaustelle aus in einer zweiten der ersten Richtung entgegengesetzten Richtung auf dem Befestigungsschaft (12) in eine ein Abfallen des Bodenbearbeitungswerkzeugs von dem Befestigungsschaft (12) verhindernde Stellung verschiebbar ist.

2. Kombination aus Bodenbearbeitungswerkzeug und Befestigungsschaft zum Durchführen des Verfahrens nach Anspruch 1, dadurch gekennzeichnet, daß der Befestigungsschaft (12) mit einem ersten und einem zweiten zueinander Abstand aufweisenden Sicherungsabschnitt versehen ist und daß der Befestigungsabschnitt (30) des Bodenbearbeitungswerkzeugs mit Führungsteilen versehen ist, die derart angeordnet sind, daß sie eine Verschiebung des Befestigungsabschnitts (30) aus der Anbaustelle in die erste oder in die zweite Richtung zulassen und in mindestens einem Sicherungsabschnitt eine weitergehende Verschiebung blockieren.

3. Kombination nach Anspruch 2, dadurch gekennzeichnet, daß der Befestigungsschaft (12) an seinen Seiten schienenförmig ausgebildet ist, wobei die Seiten des Befestigungsschafts (12) von den Führungsteilen an dem Befestigungsabschnitt (30) umgriffen werden und sich die Seiten des Befestigungsschafts (12) im Bereich zumindest eines Sicherungsabschnitts nach außen erweitern.

4. Kombination nach einem oder mehreren der Ansprüche 2 und 3, dadurch gekennzeichnet, daß eine schienenförmige Seite des Befestigungsschafts (12) mit einem Vorsprung und der diese Seite eventuell übergreifende Führungsteil des Befestigungsabschnitts (30) mit einer entsprechenden Aussparung versehen ist.

5. Kombination nach einem oder mehreren der Ansprüche 2 bis 4, dadurch gekennzeichnet, daß der Befestigungsschaft (12) mit einem die schienenförmigen Seiten und die Sicherungsabschnitte aufweisenden Adapter (16) versehen ist.

6. Kombination nach Anspruch 5, dadurch gekennzeichnet, daß die Sicherungsabschnitte am oberen und am unteren Ende des Adapters (16) vorgesehen sind, wobei sich die schienenförmigen Seiten am oberen Ende nach oben und außen und am unteren Ende nach unten und außen erweitern.

## Claims

1. A method of attaching a ground working tool, especially a duckfoot share (18) of an implement for ground care or working, to an attachment shank (12), characterized by the following steps:
- the ground working tool is put on to the attachment shank (12) in a predetermined and identified fitting position, with its attachment section (30) on the attachment shank (12) and is then folded or turned on to the attachment shank;
- the attachment section (30) of the ground working tool is pushed on the attachment shank (12) in a first direction into a fixing position;
- the ground working tool is tightened on to the attachment shank (12) in the fixing position through frictional engagement,
- wherein the attachment section (30) can be shifted on the attachment shank (12) from the fitting position in a second direction opposite to the first direction into a position preventing the ground working tool falling off the attachment shank (12).

2. A combination of a ground working tool and an attachment shank for carrying out the method according to claim 1, characterized in that the attachment shank (12) is provided with first and second securing sections spaced from one another and in that the attachment section (30) of the ground working tool is provided with guide parts which are so arranged that they allow shifting of the attachment section (30) from the fitting position in the first or the second direction and block further shifting in at least one securing section.

3. A combination according to claim 2, characterized in that the attachment shank (12) is formed with rails at its sides, wherein the sides of the attachment shank (12) are engaged by the guide parts on the attachment section (30) and the sides of the attachment shank (12) widen out in the region of at least one securing section.

4. A combination according to either or both of claims 2 and 3, characterized in that one rail form side of the attachment shank (12) is provided with a projection and guide part of the attachment section (30) which can engage this side is provided with a corresponding recess.

5. A combination according to one or more of claims 2 to 4, characterized in that the attachment shank (12) is provided with an adapter (16) comprising the rail form sides and the securing sections.

6. A combination according to claim 5, characterized in that the securing sections are provided on the upper and lower ends of the adapter (16), wherein the rail form sides widen out upwardly and outwardly at the upper end and downwardly and outwardly at the lower end.

## Revendications

1. Procédé pour raccorder un outil de travail du sol, notamment un soc sarcleur (18) d'un appareil pour le travail et le traitement du sol, à une tige de fixation (12), caractérisé par les étapes suivantes :
- on installe l'outil de travail du sol au niveau d'un emplacement déterminé par avance et caractérisé, au moyen de sa partie de fixation (30) sur la tige de fixation (12) et on le rabat ou on le fait pivoter ensuite sur la tige de fixation ;
- on déplace la partie de fixation (30) de l'outil de travail du sol sur la tige de fixation (12) dans une première direction jusque dans une position de fixation ;
- on serre l'outil de travail du sol dans la position de fixation selon une liaison par frottement sur la tige de fixation (12), la partie de fixation (30) étant déplaçable à partir du point de montage dans la seconde direction opposée à la première direction, sur la tige de fixation (12), pour venir dans une position empêchant une chute de l'outil de travail du sol, à partir de la tige de fixation (12).

2. Ensemble combiné formé d'un outil de travail du sol et d'une tige de fixation pour la mise en oeuvre du procédé selon la revendication 1, caractérisé en ce que la tige de fixation (12) est équipée de première et seconde parties de blocage, qui sont distantes l'une de l'autre et que la partie de fixation (30) de l'outil de travail du sol est pourvue de parties de guidage, qui sont disposées de telle sorte qu'elles permettent un déplacement de la partie de fixation (30) depuis le point de montage dans la première ou la seconde direction et bloquent la poursuite d'un déplacement, dans au moins une partie de blocage.

3. Ensemble combiné selon la revendication 2, caractérisé en ce que la tige de fixation (12) est agencée en forme de rail sur ses côtés, les côtés de la tige de fixation (12) étant enserrés par les parties de guidage situées sur la partie de fixation (30) tandis que les côtés de la tige de fixation (12) s'étendent vers l'extérieur dans la zone d'au moins une partie de blocage.

4. Ensemble combiné selon une ou plusieurs des revendications 2 et 3, caractérisé en ce qu'un côté en forme de rail de la tige de fixation (12) comporte un appendice saillant et que la partie de guidage, qui s'engage éventuellement au-dessus de ce côté, de la partie de fixation (30) est équipé d'un évidement correspondant.

5. Ensemble combiné selon une ou plusieurs des revendications 2 à 4, caractérisé en ce que la tige de fixation (12) comporte un adaptateur (16) qui possède les côtés en forme de rail et les parties de blocage.

6. Ensemble combiné selon la revendication 5, caractérisé en ce que les parties de blocage sont prévues à l'extrémité supérieure et à l'extrémité inférieure de l'adaptateur (16), les côtés en forme de rails s'étendant vers le haut et vers l'extérieur au niveau de l'extrémité supérieure et vers le bas et vers l'extérieur au niveau de l'extrémité inférieure.
